(19) Europäisches Patentamt / European Patent Office / Office européen des brevets

(11) EP 2 352 187 B1

(12) # EUROPEAN PATENT SPECIFICATION

(45) Date of publication and mention of the grant of the patent: **30.04.2014 Bulletin 2014/18**

(21) Application number: **09825907.0**

(22) Date of filing: **11.11.2009**

(51) Int Cl.: ***H01M 2/16*** *(2006.01)* ***H01M 10/12*** *(2006.01)*

(86) International application number: **PCT/JP2009/006022**

(87) International publication number: **WO 2010/055653 (20.05.2010 Gazette 2010/20)**

(54) **SEPARATOR FOR SEALED LEAD ACID BATTERY**

TRENNVORRICHTUNG FÜR EINE ABGEDICHTETE BLEISÄUREBATTERIE

SÉPARATEUR POUR BATTERIE PLOMB-ACIDE SCELLÉE

(84) Designated Contracting States: **AT BE BG CH CY CZ DE DK EE ES FI FR GB GR HR HU IE IS IT LI LT LU LV MC MK MT NL NO PL PT RO SE SI SK SM TR**

(30) Priority: **11.11.2008 JP 2008289279**

(43) Date of publication of application: **03.08.2011 Bulletin 2011/31**

(73) Proprietor: **Nippon Sheet Glass Company, Limited Tokyo 108-6321 (JP)**

(72) Inventors:
- **SUGIYAMA, Shoji Tokyo 108-6321 (JP)**
- **MORI, Keita Tokyo 108-6321 (JP)**

(74) Representative: **Körfer, Thomas et al**
**Mitscherlich PartmbB**
**Patent- und Rechtsanwälte**
**Sonnenstrasse 33**
**80331 München (DE)**

(56) References cited:

**EP-A1- 1 533 861**
**WO-A1-97/11501**
**WO-A1-98/15020**
**GB-A- 2 156 576**
**JP-A- 3 112 067**
**JP-A- 6 275 309**
**JP-A- 52 014 835**
**JP-A- 54 058 833**
**JP-A- 2000 268 798**

- **STEVENSON P R: "Advanced separator construction for long life valve-regulated lead-acid batteries", JOURNAL OF POWER SOURCES, ELSEVIER SA, CH, vol. 116, no. 1-2, 1 July 2003 (2003-07-01), pages 160-168, XP004433281, ISSN: 0378-7753, DOI: 10.1016/S0378-7753(02)00688-2**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a separator for a valve regulated lead-acid battery, which functions as both a retainer and a separator in a valve regulated lead-acid battery {defined in JIS C 8707 (cathode absorption-type sealed stationary lead storage battery) or JIS C 8704-2 (valve regulated stationary lead storage battery)} having a plate group formed by laminating a separator with a plate, and which comprises a fine glass fiber sheet. In addition, the invention is concerned with a valve regulated lead-acid battery using the separator.

### Background Art

Conventionally, as such a separator for a valve regulated lead-acid battery, for achieving both functions of a retainer and a separator, there has been mainly used a nonwoven fabric sheet (a paper sheet manufactured by a wet papermaking process) which comprises chiefly fine glass fibers, particularly glass fibers having an average fiber diameter of about 1 μm, and which is of a monolayer and single constitution having no laminated or composite structure.

### Summary of the Invention

### Problems that the Invention is to Solve

As main modes of reduction of the life of the recent valve regulated lead-acid battery, there have been pointed out two causes, i.e., the lowering of the pressure of the plate group after impregnating it with an electrolyte (which is mainly caused due to the reduction of the thickness of the separator, and which is, hereinafter, referred to as "pressure lowering") and the formation of layers in the electrolyte (which is a phenomenon such that the repeated charging/discharging operations cause a difference in specific gravity of the electrolyte in the upper and lower parts of the battery, and which is, hereinafter, referred to as "electrolyte stratification" or "stratification"). Therefore, in the recent valve regulated lead-acid battery, for obtaining an ideal battery having a further improved life of battery, it is necessary to remove both the above-mentioned two causes of the reduction of the life (pressure lowering and electrolyte stratification) at the same time.

However, with respect to the above-mentioned separator of a monolayer and single constitution having no laminated or composite structure, which has conventionally been mainly used, techniques for respectively removing the above-mentioned two causes of the reduction of the life (pressure lowering and electrolyte stratification) have been proposed, but a technique for removing both the two causes of the reduction of the life (pressure lowering and electrolyte stratification) at the same time has not yet been proposed. The reason for this is presumed that the improvements of the separator conducted for removing the two causes of the reduction of the life (pressure lowering and electrolyte stratification) exhibit behaviors contrary to each other and hence it has been difficult to achieve both the behaviors contrary to each other in the separator of a monolayer and single constitution having no laminated or composite structure.

Accordingly, in view of the above conventional problems, it is an object of the present invention to provide a separator for a valve regulated lead-acid battery, which functions as both a retainer and a separator and comprises a fine glass fiber sheet, wherein the separator can improve both a pressure lowering prevention effect and an electrolyte stratification prevention effect which are the requirements for removing the two causes of the reduction of the life of valve regulated lead-acid battery (pressure lowering and electrolyte stratification) that have conventionally not been able to be removed at the same time, and a valve regulated lead-acid battery using the same.

### Means for Solving the Problems

The present inventors have conducted extensive and intensive studies with a view toward achieving the above object. As a result, the following finding has been obtained. The electrolyte stratification is a phenomenon caused by the downward movement of sulfuric acid having a higher specific gravity, which is released from the plate, through mainly the separator, and therefore attention was drawn to the fact that when an improvement is made so that the separator layer in contact with the plate retains the sulfuric acid released from the plate to prevent it from moving downwardly, the electrolyte stratification prevention effect can be achieved. Particularly, as a technical point for achieving the electrolyte stratification prevention effect, attention was drawn to the fact that the improvement in the electrolyte retaining ability (electrolyte downward movement preventing ability) of especially the separator surface layer portion in contact with the plate surface among the all layers of the separator is the point.

On the other hand, for obtaining the pressure lowering prevention effect, the increase of the glass fiber diameter to enhance the repulsive force is effective, and for achieving this, the increase of the average fiber diameter of the glass fibers in the all layers of the separator is effective. Therefore, as an idea of obtaining a separator which achieves both the pressure lowering prevention effect and the electrolyte stratification prevention effect at the same time, there has been found an idea that using as a reference the separator of a monolayer and single constitution having a glass-fiber average fiber diameter of about 1 μm, which has conventionally been mainly used, the average fiber diameter of the glass fibers in the all layers is controlled to be higher than 1 μm to surely achieve the pressure lowering prevention effect, and further a difference of the average fiber diameter of the glass fibers in the thicknesswise direction of the separator is formed to achieve the electrolyte stratification prevention effect, and only in the separator surface layer portion in contact with the plate surface, the average fiber diameter of the glass fibers is controlled to be lower than 1 μm to locally enhance the electrolyte retaining ability (electrolyte downward movement preventing ability).

The present invention has been completed based on the above finding, and for achieving the above object, the separator for the valve regulated lead-acid battery according to the first embodiment of the invention is a separator for a valve regulated lead-acid battery, comprising a paper sheet manufactured by a wet papermaking process mainly made of fine glass wool fibers, wherein the separator is a structure in which a thin fiber layer comprising glass fibers having an average fiber diameter of 0.5 to 0.8 μm as the fine glass wool fibers and a thick fiber layer comprising glass fibers having an average fiber diameter of 1.3 to 1.9 μm as the fine glass wool fibers are laminated in the thicknesswise direction of the separator so that the one thick fiber layer is covered with the two thin fiber layers from both sides to constitute a three-layer laminated structure, wherein the average fiber diameter of the glass fibers in the all layers is 1.1 to 1.58 μm, wherein the thickness ratio of the thin fiber layers to the thick fiber layer in the all layers is 25/75 to 50/50.

In this invention, the average fiber diameter of the glass fibers in the all layers of the separator was controlled to be 1.1 to 1.58 μm to improve the pressure lowering prevention effect. Further, the thin fiber layer having a glass-fiber average fiber diameter of 0.8 μm or less was provided on the surface layer portion on both sides of the separator in contact with the plate surface to locally enhance the electrolyte retaining ability (electrolyte downward movement preventing ability), thus improving the electrolyte stratification prevention effect. Furthermore, although the average fiber diameter of the glass fibers in the all layers was as high as 1.1 μm or more, a difference of the average fiber diameter of the glass fibers in the thicknesswise direction of the separator was formed in the all layers of the separator to improve the electrolyte retaining ability (electrolyte downward movement preventing ability) of the separator surface layer portion in contact with the plate surface. The separator intermediate layer portion which is not in contact with the plate surface was formed from the thick fiber layer having a glass-fiber average fiber diameter of 1.3 μm or more, so that while improving the electrolyte retaining ability (electrolyte downward movement preventing ability) of the separator surface layer portion in contact with the plate surface, the average fiber diameter of the glass fibers in the all layers was controlled to be 1.1 μm or more to improve the pressure lowering prevention effect. Further, the thickness ratio of the thin fiber layers to the thick fiber layer in the all layers of the separator was controlled to be 25/75 or more to secure the electrolyte retention amount of the layer having locally enhanced electrolyte retaining force, which layer is provided on the separator surface layer portion in contact with the plate surface, so that the electrolyte retaining force and electrolyte retention amount of the above layer were secured, thus surely improving the electrolyte stratification prevention effect.

The separator for the valve regulated lead-acid battery of the second embodiment is according to the separator for the valve regulated lead-acid battery of the first embodiment, characterized in that the average fiber diameter of the glass fibers in the all layers is 1.15 to 1.4 μm.

The separator for the valve regulated lead-acid battery of the third embodiment is according to the separator for the valve regulated lead-acid battery of the second embodiment, characterized in that the average fiber diameter of the glass fibers in the all layers is 1.2 to 1.3 μm.

The separator for the valve regulated lead-acid battery of the fourth embodiment is according to the separator for the valve regulated lead-acid battery of the first embodiment, characterized in that the average fiber diameter of the glass fibers constituting the thin fiber layer is 0.6 to 0.8 μm.

The separator for the valve regulated lead-acid battery of the fifth embodiment is according to the separator for the valve regulated lead-acid battery of the first embodiment, characterized in that the average fiber diameter of the glass fibers constituting the thick fiber layer is 1.4 to 1.6 μm.

The separator for the valve regulated lead-acid battery of the sixth embodiment is according to the separator for the valve regulated lead-acid battery of the first embodiment, characterized in that the thickness ratio of the thin fiber layers to the thick fiber layer in the all layers is 25/75 to 45/55.

The separator for the valve regulated lead-acid battery of the seventh embodiment is according to the separator for the valve regulated lead-acid battery of the first embodiment, characterized in that the two thin fiber layers have substantially the same thickness.

The separator for the valve regulated lead-acid battery of the eighth embodiment is according to the separator for the valve regulated lead-acid battery of the first embodiment, characterized in that the separator comprises substantially only the fine glass fibers.

The separator for the valve regulated lead-acid battery of the ninth embodiment is according to the separator for the valve regulated lead-acid battery of the first embodiment, characterized in that the thin fiber layer and the thick fiber layer are formed in a wet papermaking process for obtaining the paper sheet so that they are in a wet state and constitute a three-layer laminated structure.

The separator for the valve regulated lead-acid battery of the twelfth embodiment is according to the separator for the valve regulated lead-acid battery of the first embodiment, characterized in that the thickness of one layer of the two thin fiber layers is 105 to 300% of the thickness of the other layer.

The separator for the valve regulated lead-acid battery of the thirteenth embodiment is according to the separator for the valve regulated lead-acid battery of the first embodiment, characterized in that the mean pore diameter of one layer of the two thin fiber layers is 105 to 180% of the mean pore diameter of the other layer and is 4.5 μm or less.

Advantage of the Invention

By the invention, in the separator for the valve regulated lead-acid battery, which functions as both a retainer and a separator and comprises a fine glass fiber sheet, it is possible to efficiently achieve the improvement of the pressure lowering prevention effect and the improvement of the electrolyte stratification prevention effect, which are the requirements for removing the two causes of the reduction of the life of valve regulated lead-acid battery (pressure lowering and electrolyte stratification) that have conventionally not been able to be removed at the same time, so that the valve regulated lead-acid battery is further improved in the life. Further, by using glass fibers having a difference in the specific surface area in the thicknesswise direction of the separator, sulfuric acid generated inside the plate during the charge reaction of the battery can be quickly incorporated into the separator, making it possible to improve the battery in charging acceptance properties.

Mode for Carrying Out the Invention

The separator for the valve regulated lead-acid battery of the invention is a separator comprising a paper sheet manufactured by a wet papermaking process mainly made of fine glass fibers, which has the requirement that the separator be a sheet-form structure in which a thin fiber layer (A layer) comprising glass fibers having an average fiber diameter of 0.5 to 0.8 μm as the fine glass fibers and a thick fiber layer (B layer) comprising glass fibers having an average fiber diameter of 1.3 to 1.9 μm as the fine glass fibers are laminated in the thicknesswise direction of the separator so that both sides of the one thick fiber layer (B layer) are covered with the two thin fiber layers (A layers) to constitute a three-layer laminated structure (A-B-A laminated structure), wherein the average fiber diameter of the glass fibers in the all layers is 1.1 to 1.58 μm, wherein the thickness ratio of the thin fiber layers to the thick fiber layer in the all layers is 25/75 to 50/50.

The average fiber diameter of the glass fibers in the all layers of the separator is 1.1 to 1.58 μm, and therefore the repulsive force of the all layers of the separator can be increased to improve the pressure lowering prevention effect. Further, the thin fiber layer having a glass-fiber average fiber diameter of 0.8 μm or less is provided on the surface layer portion on both sides of the separator in contact with the plate surface, and therefore the electrolyte retaining ability (electrolyte downward movement preventing ability) of the surface layer portion on both sides of the separator in contact with the plate surface can be enhanced to improve the electrolyte stratification prevention effect. Furthermore, a difference of the average fiber diameter of the glass fibers in the thicknesswise direction of the separator is formed in the all layers of the separator, and therefore while increasing the repulsive force of the all layers of the separator, the electrolyte retaining ability (electrolyte downward movement preventing ability) of the separator surface layer portion can be improved. The separator intermediate layer portion which is not in contact with the plate surface is formed from the thick fiber layer having a glass-fiber average fiber diameter of 1.3 μm or more, and therefore while improving the electrolyte retaining ability (electrolyte downward movement preventing ability) of the separator surface layer portion, the average fiber diameter of the glass fibers in the all layers of the separator can be 1.1 to 1.58 μm to improve the pressure lowering prevention effect. Further, the thickness ratio of the thin fiber layers to the thick fiber layer in the all layers of the separator is 25/75 or more (the total thickness of the thin fiber layers in the all layers of the separator is 25% or more of the total thickness of the all layers), and therefore the electrolyte retention amount of the layer having locally enhanced electrolyte retaining force, which layer is provided on the surface layer portion on both sides of the separator in contact with the plate surface, is secured, so that the electrolyte retaining force and electrolyte retention amount of the above layer can be secured, thus surely improving the electrolyte stratification prevention effect.

When the thickness ratio of the thin fiber layers to the thick fiber layer in the all layers of the separator is more than 50/50, it is difficult to improve the pressure lowering prevention effect, and further the proportion of the 0.8 μm or less glass fiber material to the all layers of the separator is increased, so that the unit cost of the glass fiber material in the all layers of the separator is disadvantageously increased.

When the average fiber diameter of the glass fibers constituting the thin fiber layer is less than 0.5 μm, it is difficult to achieve both the improvement of the pressure lowering prevention effect and the improvement of the electrolyte stratification prevention effect, and further the unit cost of the glass fiber material in the all layers of the separator is disadvantageously increased. Therefore, the average fiber diameter of the glass fibers constituting the thin fiber layer is more preferably 0.6 μm or more. Further, when the average fiber diameter of the glass fibers constituting the thick fiber layer is more than 1.9 μm, it is disadvantageously difficult to achieve both the improvement of the pressure lowering prevention effect and the improvement of the electrolyte stratification prevention effect. Therefore, for facilitating both the improvement of the pressure lowering prevention effect and the improvement of the electrolyte stratification prevention effect, the average fiber diameter of the glass fibers constituting the thick fiber layer is more preferably 1.4 to 1.6 μm.

Further, for facilitating both the improvement of the pressure lowering prevention effect and the improvement of the electrolyte stratification prevention effect, the average fiber diameter of the glass fibers in the all layers of the separator is preferably 1.15 to 1.4 μm, more preferably 1.2 to 1.3 μm. Furthermore, for facilitating both the improvement of the pressure lowering prevention effect and the improvement of the electrolyte stratification prevention effect, the thickness ratio of the thin fiber layers to the thick fiber layer in the all layers of the separator is preferably 25/75 to 45/55.

With respect to the two thin fiber layers disposed on both sides of the thick fiber layer, the total thickness of the two layers is 25% or more of the total thickness of the all layers, but when the two layers are in contact with both the positive plate surface and the negative plate surface and one layer is a layer in contact with the positive plate surface (positive plate-abutting layer) and the other layer is a layer in contact with the negative plate surface (negative plate-abutting layer), unless otherwise specified for a special reason, for example, required to appropriately select the positive plate-abutting layer and negative plate-abutting layer according to the battery design so that they have different thickness ratio, generally, for facilitating the improvement of the electrolyte stratification prevention effect by virtue of formation of the thin fiber layer and for facilitating both the improvement of the pressure lowering prevention effect and the improvement of the electrolyte stratification prevention effect, it is preferred that the two thin fiber layers have substantially the same thickness.

The two thin fiber layers disposed on both sides of the thick fiber layer may have different thicknesses according to the actual battery design. In this case, it is preferred that the thickness of one layer of the two thin fiber layers is 105 to 300% of the thickness of the other layer. Further, when the two thin fiber layers are in contact with both the positive plate surface and the negative plate surface and one layer is a layer in contact with the positive plate surface (positive plate-abutting layer) and the other layer is a layer in contact with the negative plate surface (negative plate-abutting layer), it is preferred that the thin fiber layer having a larger thickness among the two layers is formed so as to face the negative plate side (or constitutes the negative plate-abutting layer). In a charge/discharge reaction of a lead storage battery, the positive plate surface absorbs water simultaneously with releasing sulfuric acid during the charging and absorbs sulfuric acid simultaneously with releasing water during the discharging, and the negative plate surface releases sulfuric acid during the charging and absorbs sulfuric acid during the discharging. Thus, particularly, the plate surface of the valve regulated lead-acid battery actively gives the electrolyte to and receives it from the separator layer having an electrolyte retaining force, which is the layer adjacent to the plate surface, and the separator layer is designed so as to have a suitable electrolyte giving and receiving ability (a retention capacity and a retention speed as well as a feed capacity and a feed speed). By the way, the two thin fiber layers are required to retain in the layers the sulfuric acid released from the plate to improve the electrolyte stratification prevention effect. However, as mentioned above, the positive plate surface absorbs and releases the electrolyte simultaneously both during the charging and during the discharging, whereas the negative plate surface only releases the electrolyte during the charging and only absorbs the electrolyte during the discharging, and, with respect to the apparent movement amount of the electrolyte between the plate surface and the separator adjacent thereto, the movement amount on the negative plate surface is higher than the movement amount on the positive plate surface. Therefore, the separator surface layer abutting the negative plate surface needs to have higher electrolyte giving and receiving ability (a retention capacity and a retention speed as well as a feed capacity and a feed speed, especially in this case, a retention capacity and a feed capacity, that is, a tank function) than that of the separator surface layer abutting the positive plate surface. Accordingly, when, as mentioned above, the thickness of one layer of the two thin fiber layers is 105 to 300% of the thickness of the other layer and the thin fiber layer having a larger thickness is formed so as to face the negative plate side and the thin fiber layer having a smaller thickness is formed so as to face the positive plate side, according to a difference in the apparent movement amount of the electrolyte between the plate surface on the positive electrode side or negative electrode side and the separator adjacent thereto, the thin fiber layer having a smaller thickness and a lower tank function can be formed on the positive plate side where the movement amount is low and the thin fiber layer having a larger thickness and a higher tank function can be formed on the negative plate side where the movement amount is high, so that while exhibiting the electrolyte stratification prevention effect of the two thin fiber layers, the electrolyte giving and receiving ability of the separator with the negative plate surface is enhanced to enable an efficient battery reaction on the negative electrode side, thus improving the collective battery ability of the whole battery. It is noted that when the thickness of one layer of the two thin fiber layers is more than 300% of the thickness of the other layer, the thickness of the thin fiber layer having a smaller thickness becomes too small, so that there is disadvantageously a danger that the electrolyte stratification prevention effect of the thin fiber layer aimed at by the invention is lowered.

The two thin fiber layers disposed on both sides of the thick fiber layer may have different mean pore diameters according to the actual battery design. In this case, it is preferred that the mean pore diameter of one layer of the two thin fiber layers is 105 to 180% of the mean pore diameter of the other layer and is 4.5 μm or less. Further, when the two thin fiber layers are in contact with both the positive plate surface and the negative plate surface and one layer is a layer in contact with the positive plate surface (positive plate-abutting layer) and the other layer is a layer in contact with the negative plate surface (negative plate-abutting layer), it is preferred that the thin fiber layer having a larger mean pore diameter among the two thin fiber layers is formed so as to face the negative plate side (or constitutes the negative plate-abutting layer). As mentioned above, in the valve regulated lead-acid battery, according to a difference in the apparent movement amount of the electrolyte between the plate surface on the positive electrode side or negative electrode side and the separator adjacent thereto, the thin fiber layer having a smaller thickness and a lower tank function is formed on the positive plate side where the movement amount is low and the thin fiber layer having a larger thickness and a higher tank function is formed on the negative plate side where the movement amount is high, and thus the electrolyte giving and receiving ability of the separator with the negative plate surface is enhanced to enable an efficient battery reaction on the negative electrode side. In this case, as the electrolyte giving and receiving ability of the separator with the negative plate surface, attention is drawn to the ability for retention capacity and feed capacity (tank function), but, when attention is paid to the ability for retention speed and feed speed, the larger the mean pore diameter of the thin fiber layer, the higher the retention speed or feed speed (liquid movement speed) of the electrolyte. Therefore, when, as mentioned above, the mean pore diameter of one layer of the two thin fiber layers is 105 to 180% of the mean pore diameter of the other layer (and is 4.5 μm or less) and the thin fiber layer having a larger mean pore diameter is formed so as to face the negative plate side and the thin fiber layer having a smaller mean pore diameter is formed so as to face the positive plate side, according to a difference in the apparent movement amount of the electrolyte between the plate surface on the positive electrode side or negative electrode side and the separator adjacent thereto, the thin fiber layer having a smaller mean pore diameter and a lower liquid movement speed can be formed on the positive plate side where the movement amount is low and the thin fiber layer having a larger mean pore diameter and a higher liquid movement speed can be formed on the negative plate side where the movement amount is high, so that while exhibiting the electrolyte stratification prevention effect of the two thin fiber layers, the electrolyte giving and receiving ability of the separator with the negative plate surface is enhanced to enable an efficient battery reaction on the negative electrode side, thus improving the collective battery ability of the whole battery. It is noted that when the mean pore diameter of one layer of the two thin fiber layers is more than 180% of the mean pore diameter of the other layer or is more than 4.5 μm, the mean pore diameter of the thin fiber layer having a larger mean pore diameter becomes too large, so that there is disadvantageously a danger that the electrolyte stratification prevention effect of the thin fiber layer aimed at by the invention is lowered.

The separator of the invention is a separator comprising a paper sheet manufactured by a wet papermaking process mainly made of fine glass fibers, and according to the desired specifications or required properties, a side material or an additive such as organic fibers for, for example, improving the mechanical strength of the paper sheet manufactured by the wet papermaking process, can be used and mixed in an amount such that the effects aimed at by the invention are not sacrificed, but for facilitating the improvement of the pressure lowering prevention effect and the improvement of the electrolyte stratification prevention effect, it is preferred that the separator comprises substantially only the glass fibers.

The glass fibers in the invention are preferably glass wool fibers (glass short fibers) produced by fiberizing, for example, acid resistant C glass by a method, such as a flame method (a method in which the molten glass is allowed to fall down in the form of a thread from a nozzle at the bottom of a melting furnace and blown off by high-speed flames) or a centrifugal method (a method in which the molten glass is fed to a cylindrical container rotating at a high speed, called spinner, and having a number of orifices formed in its sidewall, and subjected to spinning by a centrifugal force and blown off by a high-speed air stream), wherein the content of the particulate material having a particle size of 30 μm or more and the fibrous material having a diameter of 10 μm or more in the glass fibers is 0.1% by mass or less. In the above-mentioned glass wool fibers, a particulate material or fibrous material having a relatively large size with respect to the size of the inherent glass wool fibers, e.g., fibers having at their ends a bulk material in a tear drop shape, fibers having a partially increased diameter, or the thick fibers remaining as those which are not blown off by flames or a high-speed air stream, may be mixed in a small amount into the inherent glass wool fibers (this is generally called shot).

A separator which is a paper sheet manufactured by a papermaking process having a three-layer structure comprising the thin fiber layer and the thick fiber layer in the invention is preferably obtained by, for example, stacking and unifying a paper sheet manufactured by a wet papermaking process constituting a thin fiber layer and a paper sheet manufactured by a wet papermaking process constituting a thick fiber layer, or, in a wet papermaking process for obtaining a paper sheet, forming a thin fiber layer and a thick fiber layer and (or forming them simultaneously with) stacking and unifying them in a wet state (a stacking paper-making method in which wet paper sheets are stacked on one another, a layering paper-making method in which a wet paper sheet is put on another while making the paper sheet to form layers, or the like), or a combination of the above former and latter methods, but, from the viewpoint of obtaining excellent adhesion between the stacked and unified layers, the separator which is the paper sheet manufactured by the paper-

making process, is more preferably obtained by the latter method, namely by, in a wet papermaking process for obtaining a paper sheet, forming a thin fiber layer and a thick fiber layer and (or forming them simultaneously with) stacking and unifying them in a wet state. With respect to the total thickness of the all layers of the separator of the invention, there is no particular limitation, but, for example, it can be about 1 to 3 mm.

Examples

Next, Examples of the present invention and Comparative Examples are described in detail.

(Comparative Example 1)

A sheet (thin fiber sheet) in a wet state, which was obtained by subjecting 100% by mass of C glass wool fibers having an average fiber diameter of 0.8 $\mu$m and a specific surface area of 1.97 $m^2$/g to wet papermaking, and a sheet (thick fiber sheet) in a wet state, which was obtained by subjecting 100% by mass of C glass wool fibers having an average fiber diameter of 1.2 $\mu$m and a specific surface area of 1.31 $m^2$/g to wet papermaking, were stacked in the order of the thin fiber sheet-thick fiber sheet-thin fiber sheet and unified with one another as they were in a wet state, and dried to obtain a separator of a three-layer laminated structure (thickness: 2.0 mm).

(Comparative Examples 2 to 14 and Examples 1 to 41)

Separators of a three-layer laminated structure (thickness: 2.0 mm) were individually obtained in the same manner as in Comparative Example 1 under the respective conditions shown in Tables 1 and 2.

(Comparative Example 15)

100% by mass of C glass wool fibers having an average fiber diameter of 0.6 $\mu$m and a specific surface area of 2.62 $m^2$/g were subjected to wet papermaking, followed by drying, to obtain a separator of a monolayer structure (thickness: 2.0 mm).

(Comparative Examples 16 to 19)

Separators of a monolayer structure (thickness: 2.0 mm) were individually obtained in the same manner as in Comparative Example 15 under the respective conditions shown in Table 2.

Then, with respect to each of the separators obtained above in Examples 1 to 41 and Comparative Examples 1 to 19, a thickness, a pressure (poured liquid repulsive force), a liquid descent speed, and a water content were measured by the methods for tests described below. The results are shown in Tables 1 and 2.

<Thickness>

A thickness was measured by a method according to the Storage Battery Association Standard SBA S 0406.

<Pressure>

The separator specimens cut into 10 cm x 10 cm are stacked so that the total thickness becomes about 6 mm, and the resultant specimen is placed in a polyethylene bag and then pressed by a horizontal pressing apparatus having a load cell under conditions at a pressure of 40 kg/100 $cm^2$, and a sulfuric acid solution having a specific gravity of 1.3 is poured portion by portion in a portion of 5 g at a time and a pressure at each time of the pouring is measured. The sulfuric acid solution is poured until the solution present inside the separator specimen overflows the surface. Then, the sulfuric acid solution overflowing the surface of the separator specimen is collected, and the amount of the collected solution and a pressure at that time are measured. Then, the sulfuric acid solution retained inside the separator specimen is forcibly withdrawn by means of a syringe, and at each time of the withdrawal, the amount of the withdrawn solution and a pressure at that time are measured. This operation is continued until it becomes impossible to withdraw the sulfuric acid solution from the separator specimen. Based on the results of these measurements, an amount of the poured solution (amount of the solution attached to the separator specimen) is taken as the abscissa and a pressure is taken as the ordinate to form a graph as shown in Fig. 1 of JP-A-5-67463. A rough behavior shown in the graph is such that after the start of pouring the solution, the pressure gradually decreases and, at a certain point in time, the pressure does not decrease any more, and then the pressure gradually increases and finally, the pressure does not increase any more and stays. The amount of the poured solution (amount of the solution attached to the separator specimen) on the abscissa at that point in time when the pressure does not increase any more and stays (point A in Fig. 1 of JP-A-5-67463) is defined as a time point for the separator specimen having a sulfuric acid solution saturation degree of 100%, and from the curve of graph corresponding to the operation of withdrawing the sulfuric acid solution from the separator specimen (curve of from point A to point C in Fig. 1 of JP-A-5-67463), a pressure (kg/100 $cm^2$) at a time point that the separator specimen has a sulfuric acid solution saturation degree of 65% is read and determined as a pressure (kg/100 $cm^2$) .

<Liquid descent speed>

A separator specimen impregnated with a satisfactory amount of water is sandwiched between acrylic plates so that the pressure becomes 50 kg/100 $cm^2$, and a colored sulfuric acid solution having a specific gravity of 1.3 is allowed to flow into the specimen from the top portion and, after 60 minutes, a distance (mm) of the descent of the colored sulfuric acid solution is measured to determine a liquid descent speed (mm/hr).

<Water content>

The separator is cut into a 10 cm × 10 cm specimen, and a weight ($W_1$) of the specimen is measured. The specimen is immersed in water for one hour and then taken out, and the specimen is held at the corner portion by forceps and kept at an angle of 45 degrees, and a specimen weight ($W_2$) is measured at a point in time when the interval during which the water droplets drop from the specimen becomes 5 seconds or more. A water content (%) is determined from the following formula.

$$\text{Water content (\%)} = (W_2 - W_1) \div W_2 \times 100$$

[Table 1]

| Item | Unit | Criterion | Comparative Example1 | Comparative Example2 | Example1 | Example2 | Example3 | Example4 | Example5 | Example6 | Example7 | Comparative Example3 | Example8 | Example9 | Example10 |
|---|---|---|---|---|---|---|---|---|---|---|---|---|---|---|---|
| Laminated structure or not | – | – | Yes | Yes | Yes | Yes | Yes | Yes | Yes | Yes | Yes | Yes | Yes | Yes | Yes |
| Laminated structure | – | – | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A |
| Constitution of layers: Thin fiber layer (A Layer) – Average fiber diameter (a1) | μm | – | 0,8 | 0,8 | 0,8 | 0,8 | 0,8 | 0,8 | 0,8 | 0,8 | 0,8 | 0,8 | 0,8 | 0,8 | 0,8 |
| Thin fiber layer (A Layer) – Specific surface area | m²/g | – | 1,97 | 1,97 | 1,97 | 1,97 | 1,97 | 1,97 | 1,97 | 1,97 | 1,97 | 1,97 | 1,97 | 1,97 | 1,97 |
| Thick fiber layer (B Layer) – Average fiber diameter (b1) | μm | – | 1,2 | 1,2 | 1,3 | 1,3 | 1,4 | 1,4 | 1,4 | 1,4 | 1,4 | 1,5 | 1,5 | 1,5 | 1,5 |
| Thick fiber layer (B Layer) – Specific surface area | m²/g | – | 1,31 | 1,31 | 1,21 | 1,21 | 1,12 | 1,12 | 1,12 | 1,12 | 1,12 | 1,05 | 1,05 | 1,05 | 1,05 |
| All layers – Average fiber diameter (c1) *1 | μm | – | 1,06 | 1,04 | 1,13 | 1,10 | 1,25 | 1,22 | 1,19 | 1,16 | 1,13 | 1,36 | 1,33 | 1,29 | 1,26 |
| Unit cost of glass fiber material (All layers) | – | – | Medium | Medium | Medium | Medium | Medium | Medium | Medium | Medium | Medium | Medium | Medium | Medium | Medium |
| Thickness – A Layer (single) | mm | – | 0,35 | 0,40 | 0,35 | 0,40 | 0,25 | 0,30 | 0,35 | 0,40 | 0,45 | 0,20 | 0,25 | 0,30 | 0,35 |
| Thickness – B Layer (single) | mm | – | 1,30 | 1,20 | 1,30 | 1,20 | 1,50 | 1,40 | 1,30 | 1,20 | 1,10 | 1,60 | 1,50 | 1,40 | 1,30 |
| Thickness – A Layer (total)(a2) | mm | – | 0,7 | 0,8 | 0,7 | 0,8 | 0,5 | 0,6 | 0,7 | 0,8 | 0,9 | 0,4 | 0,5 | 0,6 | 0,7 |
| Thickness – B Layer (total)(b2) | mm | – | 1,3 | 1,2 | 1,3 | 1,2 | 1,5 | 1,4 | 1,3 | 1,2 | 1,1 | 1,6 | 1,5 | 1,4 | 1,3 |
| Thickness – All layers (c2) | mm | – | 2,0 | 2,0 | 2,0 | 2,0 | 2,0 | 2,0 | 2,0 | 2,0 | 2,0 | 2,0 | 2,0 | 2,0 | 2,0 |
| Thickness ratio – A Layer (a3) | % | – | 35 | 40 | 35 | 40 | 25 | 30 | 35 | 40 | 45 | 20 | 25 | 30 | 35 |
| Thickness ratio – B Layer (b3) | % | – | 65 | 60 | 65 | 60 | 75 | 70 | 65 | 60 | 55 | 80 | 75 | 70 | 65 |
| Pressure – C2 | – | ≧1.01 | 1,00 | 0,99 | 1,02 | 1,01 | 1,06 | 1,05 | 1,04 | 1,02 | 1,01 | 1,09 | 1,08 | 1,06 | 1,05 |
| (Judgment) *4 | | (≧1.03) | × | × | ○ | ○ | ◎ | ◎ | ◎ | ○ | ○ | ◎ | ◎ | ◎ | ◎ |
| Thin fiber layer (A1) | kg/100cm² | – | 9,2 | 9,2 | 9,2 | 9,2 | 9,2 | 9,2 | 9,2 | 9,2 | 9,2 | 9,2 | 9,2 | 9,2 | 9,2 |
| Improvement index (A2) *2 | – | – | 0,88 | 0,88 | 0,88 | 0,88 | 0,88 | 0,88 | 0,88 | 0,88 | 0,88 | 0,88 | 0,88 | 0,88 | 0,88 |
| Thick fiber layer (B1) | kg/100cm² | – | 11,2 | 11,2 | 11,5 | 11,5 | 11,8 | 11,8 | 11,8 | 11,8 | 11,8 | 12,0 | 12,0 | 12,0 | 12,0 |
| Improvement index (B2) *2 | – | – | 1,07 | 1,07 | 1,10 | 1,10 | 1,12 | 1,12 | 1,12 | 1,12 | 1,12 | 1,14 | 1,14 | 1,14 | 1,14 |
| All layers (C1) *3 | kg/100cm² | – | 10,5 | 10,4 | 10,7 | 10,6 | 11,2 | 11,0 | 10,9 | 10,8 | 10,6 | 11,4 | 11,3 | 11,2 | 11,0 |
| Improvement index (C2) *2 | – | ≧1.01 | 1,00 | 0,99 | 1,02 | 1,01 | 1,06 | 1,05 | 1,04 | 1,02 | 1,01 | 1,09 | 1,08 | 1,06 | 1,05 |
| Stratification prevention effect – (1)(A9+B10)/2 (C3) | – | ≧1.25 | 1,70 | 1,81 | 1,63 | 1,74 | 1,34 | 1,45 | 1,55 | 1,66 | 1,77 | 1,20 | 1,30 | 1,41 | 1,52 |
| (Judgment) *12 | | (≧1.4) | ◎ | ◎ | ◎ | ◎ | ○ | ◎ | ◎ | ◎ | ◎ | × | ○ | ◎ | ◎ |
| (2)A9·B9Synthetic judgment *13 | | | ◎ | ◎ | ◎ | ◎ | ○ | ◎ | ◎ | ◎ | ◎ | × | ○ | ◎ | ◎ |
| (Synthetic judgment) *14 | | | ◎ | ◎ | ◎ | ◎ | ○ | ◎ | ◎ | ◎ | ◎ | × | ○ | ◎ | ◎ |
| Thin fiber layer – Liquid descent speed (A3) | mm/hr | – | 73 | 73 | 73 | 73 | 73 | 73 | 73 | 73 | 73 | 73 | 73 | 73 | 73 |
| Improvement index (A4) *5 | – | – | 2,12 | 2,12 | 2,12 | 2,12 | 2,12 | 2,12 | 2,12 | 2,12 | 2,12 | 2,12 | 2,12 | 2,12 | 2,12 |
| Water content (A5) | % | – | 90,5 | 90,5 | 90,5 | 90,5 | 90,5 | 90,5 | 90,5 | 90,5 | 90,5 | 90,5 | 90,5 | 90,5 | 90,5 |
| Improvement index (A6) *6 | – | – | 1,01 | 1,01 | 1,01 | 1,01 | 1,01 | 1,01 | 1,01 | 1,01 | 1,01 | 1,01 | 1,01 | 1,01 | 1,01 |
| Thickness(A7) *7 | mm | – | 0,7 | 0,8 | 0,7 | 0,8 | 0,5 | 0,6 | 0,7 | 0,8 | 0,9 | 0,4 | 0,5 | 0,6 | 0,7 |
| Liquid retention amount (A8) *8 | g/100cm² | ≧4 | 6,3 | 7,2 | 6,3 | 7,2 | 4,5 | 5,4 | 6,3 | 7,2 | 8,1 | 3,6 | 4,5 | 5,4 | 6,3 |
| (Judgment) *9 | | | ○ | ○ | ○ | ○ | ○ | ○ | ○ | ○ | ○ | × | ○ | ○ | ○ |
| A4*A6*A7 (A9) | – | ≧1.05 | 1,50 | 1,72 | 1,50 | 1,72 | 1,07 | 1,29 | 1,50 | 1,72 | 1,93 | 0,86 | 1,07 | 1,29 | 1,50 |
| (Judgment) *10 | | (≧1.2) | ◎ | ◎ | ◎ | ◎ | ○ | ◎ | ◎ | ◎ | ◎ | × | ○ | ◎ | ◎ |
| Thick fiber layer – Liquid descent speed (B3) | mm/hr | – | 203 | 203 | 218 | 218 | 239 | 239 | 239 | 239 | 239 | 248 | 248 | 248 | 248 |
| Improvement index (B4) *5 | – | – | 0,76 | 0,76 | 0,71 | 0,71 | 0,65 | 0,65 | 0,65 | 0,65 | 0,65 | 0,63 | 0,63 | 0,63 | 0,63 |
| Water content (B5) | % | – | 89,0 | 89,0 | 88,5 | 88,5 | 88,5 | 88,5 | 88,5 | 88,5 | 88,5 | 88,0 | 88,0 | 88,0 | 88,0 |
| Improvement index (B6) *6 | – | – | 0,99 | 0,99 | 0,99 | 0,99 | 0,99 | 0,99 | 0,99 | 0,99 | 0,99 | 0,98 | 0,98 | 0,98 | 0,98 |
| Thickness(B7) *7 | mm | – | 1,3 | 1,2 | 1,3 | 1,2 | 1,5 | 1,4 | 1,3 | 1,2 | 1,1 | 1,6 | 1,5 | 1,4 | 1,3 |
| Liquid retention amount (B8) *8 | g/100cm² | – | 11,6 | 10,7 | 11,5 | 10,6 | 13,3 | 12,4 | 11,5 | 10,6 | 9,7 | 14,1 | 13,2 | 12,3 | 11,4 |
| B4*B6 (B9) | – | ≧0.4 | 0,76 | 0,76 | 0,70 | 0,70 | 0,64 | 0,64 | 0,64 | 0,64 | 0,64 | 0,61 | 0,61 | 0,61 | 0,61 |
| (Judgment) *11 | | (≧0.5) | ◎ | ◎ | ◎ | ◎ | ◎ | ◎ | ◎ | ◎ | ◎ | ◎ | ◎ | ◎ | ◎ |
| B9/Reference value (B10) | – | – | 1,90 | 1,90 | 1,76 | 1,76 | 1,60 | 1,60 | 1,60 | 1,60 | 1,60 | 1,54 | 1,54 | 1,54 | 1,54 |
| Synthetic judgment(Pressure +Stratification) *15 | – | – | × | × | ○ | ○ | ○ | ◎ | ◎ | ○ | ○ | × | ○ | ◎ | ◎ |

| Item | Example11 | Example12 | Example13 | Comparative Example4 | Example14 | Example15 | Example16 | Example17 | Example18 | Comparative Example5 | Example19 | Example20 | Example21 | Example22 | Example23 | Example24 | Comparative Example6 | Comparative Example7 |
|---|---|---|---|---|---|---|---|---|---|---|---|---|---|---|---|---|---|---|
| Laminated structure or not | Yes | Yes | Yes | Yes | Yes | Yes | Yes | Yes | Yes | Yes | Yes | Yes | Yes | Yes | Yes | Yes | Yes | Yes |
| Laminated structure | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A |
| Thin fiber layer (A Layer) – Average fiber diameter (a1) | 0,8 | 0,8 | 0,8 | 0,8 | 0,8 | 0,8 | 0,8 | 0,8 | 0,8 | 0,8 | 0,8 | 0,8 | 0,8 | 0,8 | 0,8 | 0,8 | 0,8 | 0,8 |
| Thin fiber layer (A Layer) – Specific surface area | 1,97 | 1,97 | 1,97 | 1,97 | 1,97 | 1,97 | 1,97 | 1,97 | 1,97 | 1,97 | 1,97 | 1,97 | 1,97 | 1,97 | 1,97 | 1,97 | 1,97 | 1,97 |
| Thick fiber layer (B Layer) – Average fiber diameter (b1) | 1,5 | 1,5 | 1,5 | 1,5 | 1,6 | 1,6 | 1,6 | 1,6 | 1,6 | 1,6 | 1,7 | 1,7 | 1,8 | 1,8 | 1,9 | 1,9 | 2,0 | 2,0 |
| Thick fiber layer (B Layer) – Specific surface area | 1,05 | 1,05 | 1,05 | 1,05 | 0,98 | 0,98 | 0,98 | 0,98 | 0,98 | 0,98 | 0,93 | 0,93 | 0,87 | 0,87 | 0,83 | 0,83 | 0,79 | 0,79 |
| All layers – Average fiber diameter (c1) *1 | 1,22 | 1,19 | 1,15 | 1,12 | 1,36 | 1,32 | 1,28 | 1,24 | 1,20 | 1,16 | 1,39 | 1,34 | 1,45 | 1,40 | 1,52 | 1,46 | 1,58 | 1,52 |
| Unit cost of glass fiber material (All layers) | Medium | Medium | Medium | High | Medium | Medium | Medium | Medium | Medium | High | Medium | Medium | Medium | Medium | Medium | Medium | Medium | Medium |
| Thickness – A Layer (single) | 0,40 | 0,45 | 0,50 | 0,55 | 0,30 | 0,35 | 0,40 | 0,45 | 0,50 | 0,55 | 0,35 | 0,40 | 0,35 | 0,40 | 0,35 | 0,40 | 0,35 | 0,40 |
| Thickness – B Layer (single) | 1,20 | 1,10 | 1,00 | 0,90 | 1,40 | 1,30 | 1,20 | 1,10 | 1,00 | 0,90 | 1,30 | 1,20 | 1,30 | 1,20 | 1,30 | 1,20 | 1,30 | 1,20 |
| Thickness – A Layer (total)(a2) | 0,8 | 0,9 | 1,0 | 1,1 | 0,6 | 0,7 | 0,8 | 0,9 | 1,0 | 1,1 | 0,7 | 0,8 | 0,7 | 0,8 | 0,7 | 0,8 | 0,7 | 0,8 |
| Thickness – B Layer (total)(b2) | 1,2 | 1,1 | 1,0 | 0,9 | 1,4 | 1,3 | 1,2 | 1,1 | 1,0 | 0,9 | 1,3 | 1,2 | 1,3 | 1,2 | 1,3 | 1,2 | 1,3 | 1,2 |
| Thickness – All layers (c2) | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 |
| Thickness ratio – A Layer (a3) | 40 | 45 | 50 | 55 | 30 | 35 | 40 | 45 | 50 | 55 | 35 | 40 | 35 | 40 | 35 | 40 | 35 | 40 |
| Thickness ratio – B Layer (b3) | 60 | 55 | 50 | 45 | 70 | 65 | 60 | 55 | 50 | 45 | 65 | 60 | 65 | 60 | 65 | 60 | 65 | 60 |
| Pressure – C2 | 1,04 | 1,02 | 1,01 | 1,00 | 1,09 | 1,07 | 1,06 | 1,04 | 1,03 | 1,01 | 1,09 | 1,07 | 1,11 | 1,09 | 1,12 | 1,10 | 1,14 | 1,12 |
| (Judgment) *4 | ◎ | ○ | ○ | × | ◎ | ◎ | ◎ | ◎ | ◎ | ○ | ◎ | ◎ | ◎ | ◎ | ◎ | ◎ | ◎ | ◎ |
| Thin fiber layer (A1) | 9,2 | 9,2 | 9,2 | 9,2 | 9,2 | 9,2 | 9,2 | 9,2 | 9,2 | 9,2 | 9,2 | 9,2 | 9,2 | 9,2 | 9,2 | 9,2 | 9,2 | 9,2 |
| Improvement index (A2) *2 | 0,88 | 0,88 | 0,88 | 0,88 | 0,88 | 0,88 | 0,88 | 0,88 | 0,88 | 0,88 | 0,88 | 0,88 | 0,88 | 0,88 | 0,88 | 0,88 | 0,88 | 0,88 |
| Thick fiber layer (B1) | 12,0 | 12,0 | 12,0 | 12,0 | 12,4 | 12,4 | 12,4 | 12,4 | 12,4 | 12,4 | 12,6 | 12,6 | 12,9 | 12,9 | 13,1 | 13,1 | 13,5 | 13,5 |
| Improvement index (B2) *2 | 1,14 | 1,14 | 1,14 | 1,14 | 1,18 | 1,18 | 1,18 | 1,18 | 1,18 | 1,18 | 1,20 | 1,20 | 1,23 | 1,23 | 1,25 | 1,25 | 1,29 | 1,29 |
| All layers (C1) *3 | 10,9 | 10,7 | 10,6 | 10,5 | 11,4 | 11,3 | 11,1 | 11,0 | 10,8 | 10,6 | 11,4 | 11,2 | 11,6 | 11,4 | 11,7 | 11,5 | 12,0 | 11,8 |
| Improvement index (C2) *2 | 1,04 | 1,02 | 1,01 | 1,00 | 1,09 | 1,07 | 1,06 | 1,04 | 1,03 | 1,01 | 1,09 | 1,07 | 1,11 | 1,09 | 1,12 | 1,10 | 1,14 | 1,12 |
| Stratification prevention effect – (1)(A9+B10)/2 (C3) | 1,63 | 1,73 | 1,84 | 1,95 | 1,30 | 1,40 | 1,51 | 1,62 | 1,73 | 1,83 | 1,35 | 1,46 | 1,31 | 1,41 | 1,27 | 1,37 | 1,22 | 1,32 |
| (Judgment) *12 | ◎ | ◎ | ◎ | ◎ | ○ | ◎ | ◎ | ◎ | ◎ | ◎ | ○ | ◎ | ○ | ◎ | ○ | ○ | × | ○ |
| (2)A9·B9Synthetic judgment *13 | ◎ | ◎ | ◎ | ◎ | ◎ | ◎ | ◎ | ◎ | ◎ | ◎ | ○ | ○ | ○ | ○ | ○ | ○ | × | × |
| (Synthetic judgment) *14 | ◎ | ◎ | ◎ | ◎ | ○ | ◎ | ◎ | ◎ | ◎ | ◎ | ○ | ○ | ○ | ○ | ○ | ○ | × | × |
| Thin fiber layer – Liquid descent speed (A3) | 73 | 73 | 73 | 73 | 73 | 73 | 73 | 73 | 73 | 73 | 73 | 73 | 73 | 73 | 73 | 73 | 73 | 73 |
| Improvement index (A4) *5 | 2,12 | 2,12 | 2,12 | 2,12 | 2,12 | 2,12 | 2,12 | 2,12 | 2,12 | 2,12 | 2,12 | 2,12 | 2,12 | 2,12 | 2,12 | 2,12 | 2,12 | 2,12 |
| Water content (A5) | 90,5 | 90,5 | 90,5 | 90,5 | 90,5 | 90,5 | 90,5 | 90,5 | 90,5 | 90,5 | 90,5 | 90,5 | 90,5 | 90,5 | 90,5 | 90,5 | 90,5 | 90,5 |
| Improvement index (A6) *6 | 1,01 | 1,01 | 1,01 | 1,01 | 1,01 | 1,01 | 1,01 | 1,01 | 1,01 | 1,01 | 1,01 | 1,01 | 1,01 | 1,01 | 1,01 | 1,01 | 1,01 | 1,01 |
| Thickness(A7) *7 | 0,8 | 0,9 | 1,0 | 1,1 | 0,6 | 0,7 | 0,8 | 0,9 | 1,0 | 1,1 | 0,7 | 0,8 | 0,7 | 0,8 | 0,7 | 0,8 | 0,7 | 0,8 |
| Liquid retention amount (A8) *8 | 7,2 | 8,1 | 9,1 | 10,0 | 5,4 | 6,3 | 7,2 | 8,1 | 9,1 | 10,0 | 6,3 | 7,2 | 6,3 | 7,2 | 6,3 | 7,2 | 6,3 | 7,2 |
| (Judgment) *9 | ○ | ○ | ○ | ○ | ○ | ○ | ○ | ○ | ○ | ○ | ○ | ○ | ○ | ○ | ○ | ○ | ○ | ○ |
| A4*A6*A7 (A9) | 1,72 | 1,93 | 2,15 | 2,36 | 1,29 | 1,50 | 1,72 | 1,93 | 2,15 | 2,36 | 1,50 | 1,72 | 1,50 | 1,72 | 1,50 | 1,72 | 1,50 | 1,72 |
| (Judgment) *10 | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ |
| Thick fiber layer – Liquid descent speed (B3) | 248 | 248 | 248 | 248 | 290 | 290 | 290 | 290 | 290 | 290 | 314 | 314 | 340 | 340 | 365 | 365 | 402 | 402 |
| Improvement index (B4) *5 | 0,63 | 0,63 | 0,63 | 0,63 | 0,53 | 0,53 | 0,53 | 0,53 | 0,53 | 0,53 | 0,49 | 0,49 | 0,46 | 0,46 | 0,42 | 0,42 | 0,39 | 0,39 |
| Water content (B5) | 88,0 | 88,0 | 88,0 | 88,0 | 87,5 | 87,5 | 87,5 | 87,5 | 87,5 | 87,5 | 87,5 | 87,5 | 87,0 | 87,0 | 87,0 | 87,0 | 86,5 | 86,5 |
| Improvement index (B6) *6 | 0,98 | 0,98 | 0,98 | 0,98 | 0,98 | 0,98 | 0,98 | 0,98 | 0,98 | 0,98 | 0,98 | 0,98 | 0,97 | 0,97 | 0,97 | 0,97 | 0,97 | 0,97 |
| Thickness(B7) *7 | 1,2 | 1,1 | 1,0 | 0,9 | 1,4 | 1,3 | 1,2 | 1,1 | 1,0 | 0,9 | 1,3 | 1,2 | 1,3 | 1,2 | 1,3 | 1,2 | 1,3 | 1,2 |
| Liquid retention amount (B8) *8 | 10,6 | 9,7 | 8,8 | 7,9 | 12,3 | 11,4 | 10,5 | 9,6 | 8,8 | 7,9 | 11,4 | 10,5 | 11,3 | 10,4 | 11,3 | 10,4 | 11,2 | 10,4 |
| B4*B6 (B9) | 0,61 | 0,61 | 0,61 | 0,61 | 0,52 | 0,52 | 0,52 | 0,52 | 0,52 | 0,52 | 0,48 | 0,48 | 0,44 | 0,44 | 0,41 | 0,41 | 0,37 | 0,37 |
| (Judgment) *11 | ◎ | ◎ | ◎ | ◎ | ◎ | ◎ | ◎ | ◎ | ◎ | ◎ | ○ | ○ | ○ | ○ | ○ | ○ | × | × |
| B9/Reference value (B10) | 1,54 | 1,54 | 1,54 | 1,54 | 1,31 | 1,31 | 1,31 | 1,31 | 1,31 | 1,31 | 1,21 | 1,21 | 1,11 | 1,11 | 1,03 | 1,03 | 0,93 | 0,93 |
| Synthetic judgment(Pressure +Stratification) *15 | ◎ | ○ | ○ | × | ○ | ◎ | ◎ | ◎ | ◎ | ○ | ○ | ○ | ○ | ○ | ○ | ○ | × | × |

*1 Value calculated from the average fiber diameter of A layer and the average fiber diameter of B layer: c1 = a1 × (a3/100) + b1 × (b3/100)
*2 Index indicating a degree of the improvement of the pressure, determined using the value in Comparative Example 17 as a reference (= 1): A2 = A1/(A1 in Comparative Example 17); B2 = B1/(B1 in Comparative Example 17); C2 = C1/(C1 in Comparative Example 17)
*3 C1 = A1 × (a3/100) + B1 × (b3/100)
*4 ◎ is shown when the C2 value is the second reference value (= 1.03) or more; ○ is shown when the C2 value is the first reference value (= 1.01) or more; and × is shown when the C2 value is not any of them.
*5 Index indicating a degree of the improvement of the liquid descent speed, determined using the value in Comparative Example 17 as a reference (= 1): A4 = 1/(A3/(A3 in Comparative Example 17)); B4 = 1/(B3/(B3 in Comparative Example 17))
*6 Index indicating a degree of the improvement of the water content, determined using the value in Comparative Example 17 as a reference (= 1): A6 = A5/(A5 in Comparative Example 17); B6 = B5/(B5 in Comparative Example 17)
*7 A7 = a2; B7 = b2
*8 Liquid retention amount (g) per 100 cm2 of each specimen: A8 = (10 × 10 × A7/10) × (A5/100); B8 = (10 × 10 × B7/10) × (B5/100)
*9 ○ is shown when the A8 value is the reference value (= 4) or more; and × is shown when the A8 value is less than the reference value.
*10 ◎ is shown when the A9 value is the second reference value (= 1.2) or more; ○ is shown when the A9 value is the first reference value (= 1.05) or more; and × is shown when the A9 value is not any of them.
*11 ◎ is shown when the B9 value is the second reference value (= 0.5) or more; ○ is shown when the B9 value is the first reference value (= 0.4) or more; and × is shown when the B9 value is not any of them.
*12 ◎ is shown when the C3 value is the second reference value (= 1.4) or more; ○ is shown when the C3 value is the first reference value (= 1.25) or more; and × is shown when the C3 value is not any of them.
*13 ◎ is shown when the A9 value is the second reference value (= 1.2) or more and the B9 value is the second reference value (= 0.5) or more; ○ is shown when the A9 value is the first reference value (= 1.05) or more and the B9 value is the first reference value (= 0.4) or more; and × is shown when the A9 and B9 values are less than those reference values.
*14 ◎ is shown when the A9 value is the second reference value (= 1.2) or more, the B9 value is the second reference value (= 0.5) or more, the C3 value is the second reference value (= 1.4) or more, and the A8 value is the reference value (= 4) or more; ○ is shown when the A9 value is the first reference value (= 1.05) or more, the B9 value is the first reference value (= 0.4) or more, the C3 value is the first reference value (= 1.25) or more, and the A8 value is the reference value (= 4) or more; and × is shown when the A9, B9, C3, and A8 values are less than those reference values.
*15 ◎ is shown when the judgment for pressure is ◎ and the synthetic judgment for stratification prevention effect is ◎; ○ is shown when the judgment for pressure is ◎ or ○ and the synthetic judgment for stratification prevention effect is ◎ or ○; and × is shown when the judgments are not any of those mentioned above.

[Table 2]

| Item | Unit | Criterion | Comparative Example8 | Comparative Example9 | Example25 | Comparative Example10 | Example26 | Example27 | Comparative Example11 | Comparative Example12 | Example28 | Example29 | Example30 | Example31 |
|---|---|---|---|---|---|---|---|---|---|---|---|---|---|---|
| Laminated structure or not | — | — | Yes | Yes | Yes | Yes | Yes | Yes | Yes | Yes | Yes | Yes | Yes | Yes |
| Laminated structure | — | — | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A |
| Constitution of layers: Thin fiber layer (A Layer) Average fiber diameter (a1) | μm | — | 0,6 | 0,6 | 0,6 | 0,6 | 0,6 | 0,6 | 0,6 | 0,6 | 0,6 | 0,6 | 0,6 | 0,6 |
| Specific surface area | $m^2/g$ | — | 2,62 | 2,62 | 2,62 | 2,62 | 2,62 | 2,62 | 2,62 | 2,62 | 2,62 | 2,62 | 2,62 | 2,62 |
| Thick fiber layer (B Layer) Average fiber diameter (b1) | μm | — | 1,2 | 1,2 | 1,3 | 1,3 | 1,4 | 1,4 | 1,5 | 1,5 | 1,5 | 1,5 | 1,5 | 1,5 |
| Specific surface area | $m^2/g$ | — | 1,31 | 1,31 | 1,21 | 1,21 | 1,12 | 1,12 | 1,05 | 1,05 | 1,05 | 1,05 | 1,05 | 1,05 |
| All layers Average fiber diameter (c1) *1 | μm | — | 1,05 | 1,02 | 1,13 | 1,09 | 1,20 | 1,16 | 1,37 | 1,32 | 1,28 | 1,23 | 1,19 | 1,14 |
| Unit cost of glass fiber material (All layers) | — | — | Medium | Medium | Medium | Medium | Medium | Medium | Medium | Medium | Medium | Medium | Medium | Medium |
| Thickness: A Layer (single) | mm | — | 0,25 | 0,30 | 0,25 | 0,30 | 0,25 | 0,30 | 0,15 | 0,20 | 0,25 | 0,30 | 0,35 | 0,40 |
| B Layer (single) | mm | — | 1,50 | 1,40 | 1,50 | 1,40 | 1,50 | 1,40 | 1,70 | 1,60 | 1,50 | 1,40 | 1,30 | 1,20 |
| A Layer (total)(a2) | mm | — | 0,5 | 0,6 | 0,5 | 0,6 | 0,5 | 0,6 | 0,3 | 0,4 | 0,5 | 0,6 | 0,7 | 0,8 |
| B Layer (total)(b2) | mm | — | 1,5 | 1,4 | 1,5 | 1,4 | 1,5 | 1,4 | 1,7 | 1,6 | 1,5 | 1,4 | 1,3 | 1,2 |
| All layers (c2) | mm | — | 2,0 | 2,0 | 2,0 | 2,0 | 2,0 | 2,0 | 2,0 | 2,0 | 2,0 | 2,0 | 2,0 | 2,0 |
| Thickness ratio A Layer (a3) | % | — | 25 | 30 | 25 | 30 | 25 | 30 | 15 | 20 | 25 | 30 | 35 | 40 |
| Thickness ratio B Layer (b3) | % | — | 75 | 70 | 75 | 70 | 75 | 70 | 85 | 80 | 75 | 70 | 65 | 60 |
| Pressure: C2 | — | ≧1.01 | 1,00 | 0,98 | 1,02 | 1,00 | 1,04 | 1,02 | 1,09 | 1,07 | 1,05 | 1,03 | 1,02 | 1,01 |
| (Judgment) *4 | | (≧1.03) | × | × | ○ | × | ◎ | ○ | ◎ | ◎ | ◎ | ◎ | ○ | ○ |
| Thin fiber layer (A1) | $kg/100cm^2$ | — | 8,2 | 8,2 | 8,2 | 8,2 | 8,2 | 8,2 | 8,2 | 8,2 | 8,2 | 8,2 | 8,2 | 8,2 |
| Improvement index (A2) *2 | — | — | 0,78 | 0,78 | 0,78 | 0,78 | 0,78 | 0,78 | 0,78 | 0,78 | 0,78 | 0,78 | 0,78 | 0,78 |
| Thick fiber layer (B1) | $kg/100cm^2$ | — | 11,2 | 11,2 | 11,5 | 11,5 | 11,8 | 11,8 | 12,0 | 12,0 | 12,0 | 12,0 | 12,0 | 12,0 |
| Improvement index (B2) *2 | — | — | 1,07 | 1,07 | 1,10 | 1,10 | 1,12 | 1,12 | 1,14 | 1,14 | 1,14 | 1,14 | 1,14 | 1,14 |
| All layers (C1) *3 | $kg/100cm^2$ | — | 10,5 | 10,3 | 10,7 | 10,5 | 10,9 | 10,7 | 11,4 | 11,2 | 11,1 | 10,9 | 10,7 | 10,5 |
| Improvement index (C2) *2 | — | ≧1.01 | 1,00 | 0,98 | 1,02 | 1,00 | 1,04 | 1,02 | 1,09 | 1,07 | 1,05 | 1,03 | 1,02 | 1,01 |
| Stratification prevention effect: (1)(A9+B10)/2 (C3) | — | ≧1.25 | 1,83 | 2,01 | 1,76 | 1,94 | 1,69 | 1,86 | 1,30 | 1,48 | 1,65 | 1,83 | 2,01 | 2,18 |
| (Judgment) *12 | | (≧1.4) | ◎ | ◎ | ◎ | ◎ | ◎ | ◎ | ○ | ◎ | ◎ | ◎ | ◎ | ◎ |
| (2)A9·B9Synthetic judgment *13 | | | ◎ | ◎ | ◎ | ◎ | ◎ | ◎ | ○ | ◎ | ◎ | ◎ | ◎ | ◎ |
| (Synthetic judgment) *14 | | | ◎ | ◎ | ◎ | ◎ | ◎ | ◎ | × | × | ◎ | ◎ | ◎ | ◎ |
| Thin fiber layer: Liquid descent speed (A3) | mm/hr | — | 45 | 45 | 45 | 45 | 45 | 45 | 45 | 45 | 45 | 45 | 45 | 45 |
| Improvement index (A4) *5 | — | — | 3,44 | 3,44 | 3,44 | 3,44 | 3,44 | 3,44 | 3,44 | 3,44 | 3,44 | 3,44 | 3,44 | 3,44 |
| Water content (A5) | % | — | 92,0 | 92,0 | 92,0 | 92,0 | 92,0 | 92,0 | 92,0 | 92,0 | 92,0 | 92,0 | 92,0 | 92,0 |
| Improvement index (A6) *6 | — | — | 1,03 | 1,03 | 1,03 | 1,03 | 1,03 | 1,03 | 1,03 | 1,03 | 1,03 | 1,03 | 1,03 | 1,03 |
| Thickness(A7) *7 | mm | — | 0,5 | 0,6 | 0,5 | 0,6 | 0,5 | 0,6 | 0,3 | 0,4 | 0,5 | 0,6 | 0,7 | 0,8 |
| Liquid retention amount (A8) *8 | $g/100cm^2$ | ≧4 | 4,6 | 5,5 | 4,6 | 5,5 | 4,6 | 5,5 | 2,8 | 3,7 | 4,6 | 5,5 | 6,4 | 7,4 |
| (Judgment) *9 | | | ○ | ○ | ○ | ○ | ○ | ○ | × | × | ○ | ○ | ○ | ○ |
| A4*A6*A7 (A9) | — | ≧1.05 | 1,77 | 2,12 | 1,77 | 2,12 | 1,77 | 2,12 | 1,06 | 1,42 | 1,77 | 2,12 | 2,48 | 2,83 |
| (Judgment) *10 | | (≧1.2) | ◎ | ◎ | ◎ | ◎ | ◎ | ◎ | ○ | ◎ | ◎ | ◎ | ◎ | ◎ |
| Thick fiber layer: Liquid descent speed (B3) | mm/hr | — | 203 | 203 | 218 | 218 | 239 | 239 | 248 | 248 | 248 | 248 | 248 | 248 |
| Improvement index (B4) *5 | — | — | 0,76 | 0,76 | 0,71 | 0,71 | 0,65 | 0,65 | 0,63 | 0,63 | 0,63 | 0,63 | 0,63 | 0,63 |
| Water content (B5) | % | — | 89,0 | 89,0 | 88,5 | 88,5 | 88,5 | 88,5 | 88,0 | 88,0 | 88,0 | 88,0 | 88,0 | 88,0 |
| Improvement index (B6) *6 | — | — | 0,99 | 0,99 | 0,99 | 0,99 | 0,99 | 0,99 | 0,98 | 0,98 | 0,98 | 0,98 | 0,98 | 0,98 |
| Thickness(B7) *7 | mm | — | 1,5 | 1,4 | 1,5 | 1,4 | 1,5 | 1,4 | 1,7 | 1,6 | 1,5 | 1,4 | 1,3 | 1,2 |
| Liquid retention amount (B8) *8 | $g/100cm^2$ | — | 13,4 | 12,5 | 13,3 | 12,4 | 13,3 | 12,4 | 15,0 | 14,1 | 13,2 | 12,3 | 11,4 | 10,6 |
| B4*B6 (B9) | — | ≧0.4 | 0,76 | 0,76 | 0,70 | 0,70 | 0,64 | 0,64 | 0,61 | 0,61 | 0,61 | 0,61 | 0,61 | 0,61 |
| (Judgment) *11 | | (≧0.5) | ◎ | ◎ | ◎ | ◎ | ◎ | ◎ | ◎ | ◎ | ◎ | ◎ | ◎ | ◎ |
| B9/Reference value (B10) | — | — | 1,90 | 1,90 | 1,76 | 1,76 | 1,60 | 1,60 | 1,54 | 1,54 | 1,54 | 1,54 | 1,54 | 1,54 |
| Synthetic judgment(Pressure +Stratification) *15 | — | — | × | × | ○ | × | ◎ | ○ | × | × | ◎ | ◎ | ○ | ○ |

| Item | Unit | Criterion | Example32 | Example33 | Example34 | Example35 | Example36 | Example37 | Example38 | Example39 | Example40 | Example41 | Comparative Example13 | Comparative Example14 | Comparative Example15 | Comparative Example16 | Comparative Example17 | Comparative Example18 | Comparative Example19 |
|---|---|---|---|---|---|---|---|---|---|---|---|---|---|---|---|---|---|---|---|
| Laminated structure or not | — | — | Yes | Yes | Yes | Yes | Yes | Yes | Yes | Yes | Yes | Yes | Yes | Yes | No | No | No | No | No |
| Laminated structure | — | — | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | 3 Layers A-B-A | — | — | — | — | — |
| Constitution of layers: Thin fiber layer (A Layer) Average fiber diameter (a1) | μm | — | 0,6 | 0,6 | 0,6 | 0,6 | 0,6 | 0,6 | 0,6 | 0,6 | 0,6 | 0,6 | 0,6 | 0,6 | 0,6 | 0,8 | 1,0 | 1,5 | 2,0 |
| Specific surface area | $m^2/g$ | — | 2,62 | 2,62 | 2,62 | 2,62 | 2,62 | 2,62 | 2,62 | 2,62 | 2,62 | 2,62 | 2,62 | 2,62 | 2,62 | 1,97 | 1,57 | 1,05 | 0,79 |
| Thick fiber layer (B Layer) Average fiber diameter (b1) | μm | — | 1,6 | 1,6 | 1,6 | 1,6 | 1,7 | 1,7 | 1,8 | 1,8 | 1,9 | 1,9 | 2,0 | 2,0 | 0,6 | 0,8 | 1,0 | 1,5 | 2,0 |
| Specific surface area | $m^2/g$ | — | 0,98 | 0,98 | 0,98 | 0,98 | 0,93 | 0,93 | 0,87 | 0,87 | 0,83 | 0,83 | 0,79 | 0,79 | 2,62 | 1,97 | 1,57 | 1,05 | 0,79 |
| All layers Average fiber diameter (c1) *1 | μm | — | 1,35 | 1,30 | 1,25 | 1,20 | 1,43 | 1,37 | 1,50 | 1,44 | 1,58 | 1,51 | 1,65 | 1,58 | 0,60 | 0,80 | 1,00 | 1,50 | 2,00 |
| Unit cost of glass fiber material (All layers) | — | — | Medium | Medium | Medium | Medium | Medium | Medium | Medium | Medium | Medium | Medium | Medium | Medium | High | High | Medium | Medium | Low |
| Thickness: A Layer (single) | mm | — | 0,25 | 0,30 | 0,35 | 0,40 | 0,25 | 0,30 | 0,25 | 0,30 | 0,25 | 0,30 | 0,25 | 0,30 | — | — | — | — | — |
| B Layer (single) | mm | — | 1,50 | 1,40 | 1,30 | 1,20 | 1,50 | 1,40 | 1,50 | 1,40 | 1,50 | 1,40 | 1,50 | 1,40 | — | — | — | — | — |
| A Layer (total)(a2) | mm | — | 0,5 | 0,6 | 0,7 | 0,8 | 0,5 | 0,6 | 0,5 | 0,6 | 0,5 | 0,6 | 0,5 | 0,6 | 1,0 | 1,0 | 1,0 | 1,0 | 1,0 |
| B Layer (total)(b2) | mm | — | 1,5 | 1,4 | 1,3 | 1,2 | 1,5 | 1,4 | 1,5 | 1,4 | 1,5 | 1,4 | 1,5 | 1,4 | 1,0 | 1,0 | 1,0 | 1,0 | 1,0 |
| All layers (c2) | mm | — | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 |
| Thickness ratio A Layer (a3) | % | — | 25 | 30 | 35 | 40 | 25 | 30 | 25 | 30 | 25 | 30 | 25 | 30 | 50 | 50 | 50 | 50 | 50 |
| Thickness ratio B Layer (b3) | % | — | 75 | 70 | 65 | 60 | 75 | 70 | 75 | 70 | 75 | 70 | 75 | 70 | 50 | 50 | 50 | 50 | 50 |
| Pressure: C2 | — | ≧1.01 | 1,08 | 1,06 | 1,04 | 1,02 | 1,10 | 1,07 | 1,12 | 1,09 | 1,13 | 1,11 | 1,16 | 1,13 | 0,78 | 0,88 | 1,00 | 1,14 | 1,29 |
| (Judgment) *4 | | (≧1.03) | ◎ | ◎ | ◎ | ○ | ◎ | ◎ | ◎ | ◎ | ◎ | ◎ | ◎ | ◎ | × | × | × | ◎ | ◎ |
| Thin fiber layer (A1) | $kg/100cm^2$ | — | 8,2 | 8,2 | 8,2 | 8,2 | 8,2 | 8,2 | 8,2 | 8,2 | 8,2 | 8,2 | 8,2 | 8,2 | 8,2 | 9,2 | 10,5 | 12,0 | 13,5 |
| Improvement index (A2) *2 | — | — | 0,78 | 0,78 | 0,78 | 0,78 | 0,78 | 0,78 | 0,78 | 0,78 | 0,78 | 0,78 | 0,78 | 0,78 | 0,78 | 0,88 | 1,00 | 1,14 | 1,29 |
| Thick fiber layer (B1) | $kg/100cm^2$ | — | 12,4 | 12,4 | 12,4 | 12,4 | 12,6 | 12,6 | 12,9 | 12,9 | 13,1 | 13,1 | 13,5 | 13,5 | 8,2 | 9,2 | 10,5 | 12,0 | 13,5 |
| Improvement index (B2) *2 | — | — | 1,18 | 1,18 | 1,18 | 1,18 | 1,20 | 1,20 | 1,23 | 1,23 | 1,25 | 1,25 | 1,29 | 1,29 | 0,78 | 0,88 | 1,00 | 1,14 | 1,29 |
| All layers (C1) *3 | $kg/100cm^2$ | — | 11,4 | 11,1 | 10,9 | 10,7 | 11,5 | 11,3 | 11,7 | 11,5 | 11,9 | 11,6 | 12,2 | 11,9 | 8,2 | 9,2 | 10,5 | 12,0 | 13,5 |
| Improvement index (C2) *2 | — | ≧1.01 | 1,08 | 1,06 | 1,04 | 1,02 | 1,10 | 1,07 | 1,12 | 1,09 | 1,13 | 1,11 | 1,16 | 1,13 | 0,78 | 0,88 | 1,00 | 1,14 | 1,29 |
| Stratification prevention effect: (1)(A9+B10)/2 (C3) | — | ≧1.25 | 1,54 | 1,72 | 1,89 | 2,07 | 1,49 | 1,67 | 1,44 | 1,62 | 1,40 | 1,58 | 1,35 | 1,53 | 6,20 | 3,76 | 1,75 | 1,08 | 0,65 |
| (Judgment) *12 | | (≧1.4) | ◎ | ◎ | ◎ | ◎ | ◎ | ◎ | ◎ | ◎ | ◎ | ◎ | ○ | ◎ | ◎ | ◎ | ◎ | × | × |
| (2)A9·B9Synthetic judgment *13 | | | ◎ | ◎ | ◎ | ◎ | ○ | ○ | ○ | ○ | ○ | ○ | × | × | ◎ | ◎ | × | × | × |
| (Synthetic judgment) *14 | | | ◎ | ◎ | ◎ | ◎ | ○ | ○ | ○ | ○ | ○ | ○ | × | × | ◎ | ◎ | × | × | × |
| Thin fiber layer: Liquid descent speed (A3) | mm/hr | — | 45 | 45 | 45 | 45 | 45 | 45 | 45 | 45 | 45 | 45 | 45 | 45 | 45 | 73 | 155 | 248 | 402 |
| Improvement index (A4) *5 | — | — | 3,44 | 3,44 | 3,44 | 3,44 | 3,44 | 3,44 | 3,44 | 3,44 | 3,44 | 3,44 | 3,44 | 3,44 | 3,44 | 2,12 | 1,00 | 0,63 | 0,39 |
| Water content (A5) | % | — | 92,0 | 92,0 | 92,0 | 92,0 | 92,0 | 92,0 | 92,0 | 92,0 | 92,0 | 92,0 | 92,0 | 92,0 | 92,0 | 90,5 | 89,5 | 88,0 | 86,5 |
| Improvement index (A6) *6 | — | — | 1,03 | 1,03 | 1,03 | 1,03 | 1,03 | 1,03 | 1,03 | 1,03 | 1,03 | 1,03 | 1,03 | 1,03 | 1,03 | 1,01 | 1,00 | 0,98 | 0,97 |
| Thickness(A7) *7 | mm | — | 0,5 | 0,6 | 0,7 | 0,8 | 0,5 | 0,6 | 0,5 | 0,6 | 0,5 | 0,6 | 0,5 | 0,6 | 1,0 | 1,0 | 1,0 | 1,0 | 1,0 |
| Liquid retention amount (A8) *8 | $g/100cm^2$ | ≧4 | 4,6 | 5,5 | 6,4 | 7,4 | 4,6 | 5,5 | 4,6 | 5,5 | 4,6 | 5,5 | 4,6 | 5,5 | 9,2 | 9,1 | 9,0 | 8,8 | 8,7 |
| (Judgment) *9 | | | ○ | ○ | ○ | ○ | ○ | ○ | ○ | ○ | ○ | ○ | ○ | ○ | ○ | ○ | ○ | ○ | ○ |
| A4*A6*A7 (A9) | — | ≧1.05 | 1,77 | 2,12 | 2,48 | 2,83 | 1,77 | 2,12 | 1,77 | 2,12 | 1,77 | 2,12 | 1,77 | 2,12 | 3,54 | 2,15 | 1,00 | 0,61 | 0,37 |
| (Judgment) *10 | | (≧1.2) | ◎ | ◎ | ◎ | ◎ | ◎ | ◎ | ◎ | ◎ | ◎ | ◎ | ◎ | ◎ | ◎ | ◎ | × | × | × |
| Thick fiber layer: Liquid descent speed (B3) | mm/hr | — | 290 | 290 | 290 | 290 | 314 | 314 | 340 | 340 | 365 | 365 | 402 | 402 | 45 | 73 | 155 | 248 | 402 |
| Improvement index (B4) *5 | — | — | 0,53 | 0,53 | 0,53 | 0,53 | 0,49 | 0,49 | 0,46 | 0,46 | 0,42 | 0,42 | 0,39 | 0,39 | 3,44 | 2,12 | 1,00 | 0,63 | 0,39 |
| Water content (B5) | % | — | 87,5 | 87,5 | 87,5 | 87,5 | 87,5 | 87,5 | 87,0 | 87,0 | 87,0 | 87,0 | 86,5 | 86,5 | 92,0 | 90,5 | 89,5 | 88,0 | 86,5 |
| Improvement index (B6) *6 | — | — | 0,98 | 0,98 | 0,98 | 0,98 | 0,98 | 0,98 | 0,97 | 0,97 | 0,97 | 0,97 | 0,97 | 0,97 | 1,03 | 1,01 | 1,00 | 0,98 | 0,97 |
| Thickness(B7) *7 | mm | — | 1,5 | 1,4 | 1,3 | 1,2 | 1,5 | 1,4 | 1,5 | 1,4 | 1,5 | 1,4 | 1,5 | 1,4 | 1,0 | 1,0 | 1,0 | 1,0 | 1,0 |
| Liquid retention amount (B8) *8 | $g/100cm^2$ | — | 13,1 | 12,3 | 11,4 | 10,5 | 13,1 | 12,3 | 13,1 | 12,2 | 13,1 | 12,2 | 13,0 | 12,1 | 9,2 | 9,1 | 9,0 | 8,8 | 8,7 |
| B4*B6 (B9) | — | ≧0.4 | 0,52 | 0,52 | 0,52 | 0,52 | 0,48 | 0,48 | 0,44 | 0,44 | 0,41 | 0,41 | 0,37 | 0,37 | 3,54 | 2,15 | 1,00 | 0,61 | 0,37 |
| (Judgment) *11 | | (≧0.5) | ◎ | ◎ | ◎ | ◎ | ○ | ○ | ○ | ○ | ○ | ○ | × | × | ◎ | ◎ | ◎ | ◎ | × |
| B9/Reference value (B10) | — | — | 1,31 | 1,31 | 1,31 | 1,31 | 1,21 | 1,21 | 1,11 | 1,11 | 1,03 | 1,03 | 0,93 | 0,93 | 8,85 | 5,37 | 2,50 | 1,54 | 0,93 |
| Synthetic judgment(Pressure +Stratification) *15 | — | — | ◎ | ◎ | ◎ | ○ | ○ | ○ | ○ | ○ | ○ | ○ | × | × | × | × | × | × | × |

*1 Value calculated from the average fiber diameter of A layer and the average fiber diameter of B layer: c1 = a1 × (a3/100) + b1 × (b3/100)
*2 Index indicating a degree of the improvement of the pressure, determined using the value in Comparative Example 17 as a reference (= 1): A2 = A1/(A1 in Comparative Example 17); B2 = B1/(B1 in Comparative Example 17); C2 = C1/(C1 in Comparative Example 17)
*3 C1 = A1 × (a3/100) + B1 × (b3/100)
*4 ◎ is shown when the C2 value is the second reference value (= 1.03) or more; O is shown when the C2 value is the first reference value (= 1.01) or more; and × is shown when the C2 value is not any of them.
*5 Index indicating a degree of the improvement of the liquid descent speed, determined using the value in Comparative Example 17 as a reference (= 1): A4 = 1/(A3/(A3 in Comparative Example 17)); B4 = 1/(B3/(B3 in Comparative Example 17))
*6 Index indicating a degree of the improvement of the water content, determined using the value in Comparative Example 17 as a reference (= 1): A6 = A5/(A5 in Comparative Example 17); B6 = B5/(B5 in Comparative Example 17)
*7 A7 = a2; B7 = b2
*8 Liquid retention amount (g) per 100 cm2 of each specimen: A8 = (10 × 10 × A7/10) × (A5/100); B8 = (10 × 10 × B7/10) × (B5/100)
*9 O is shown when the A8 value is the reference value (= 4) or more; and × is shown when the A8 value is less than the reference value.
*10 ◎ is shown when the A9 value is the second reference value (= 1.2) or more; O is shown when the A9 value is the first reference value (= 1.05) or more; and × is shown when the A9 value is not any of them.
*11 ◎ is shown when the B9 value is the second reference value (= 0.5) or more; O is shown when the B9 value is the first reference value (= 0.4) or more; and × is shown when the B9 value is not any of them.
*12 ◎ is shown when the C3 value is the second reference value (= 1.4) or more; O is shown when the C3 value is the first reference value (= 1.25) or more; and × is shown when the C3 value is not any of them.
*13 ◎ is shown when the A9 value is the second reference value (= 1.2) or more and the B9 value is the second reference value (= 0.5) or more; O is shown when the A9 value is the first reference value (= 1.05) or more and the B9 value is the first reference value (= 0.4) or more; and × is shown when the A9 and B9 values are less than those reference values.
*14 ◎ is shown when the A9 value is the second reference value (= 1.2) or more, the B9 value is the second reference value (= 0.5) or more, the C3 value is the second reference value (= 1.4) or more, and the A8 value is the reference value (= 4) or more; O is shown when the A9 value is the first reference value (= 1.05) or more, the B9 value is the first reference value (= 0.4) or more, the C3 value is the first reference value (= 1.25) or more, and the A8 value is the reference value (= 4) or more; and × is shown when the A9, B9, C3, and A8 values are less than those reference values.
*15 ◎ is shown when the judgment for pressure is ◎ and the synthetic judgment for stratification prevention effect is ◎; O is shown when the judgment for pressure is ◎ or O and the synthetic judgment for stratification prevention effect is ◎ or O; and × is shown when the judgments are not any of those mentioned above.

From Tables 1 and 2, the following has been found.

(1) The pressure properties, which are an indicator of the "pressure lowering prevention effect" that is one of the requirements for removing the two main causes of the reduction of the life of valve regulated lead-acid battery, are substantially ascribed to the average fiber diameter (c1) of the glass fibers in the all layers of the separator, and are good when the average fiber diameter (c1) of the glass fibers in the all layers of the separator is high.
(2) With respect to the stratification prevention effect, which is an indicator of the "electrolyte stratification prevention effect" that is one of the requirements for removing the two main causes of the reduction of the life of valve regulated lead-acid battery, first, as the first indicator, by an index (A9) obtained by multiplying a liquid descent speed property improvement index (A4), a water content property improvement index (A6), and a thickness (A7) for the thin fiber layer, a simple electrolyte retaining ability (ability to prevent downward movement of the electrolyte to retain it) of the thin fiber layer is judged. As the second indicator, an electrolyte retention amount (A8) of the thin fiber layer is judged. The above-mentioned index (A9) includes the concept of thickness, but this index is strongly affected by the grade of the liquid descent speed property improvement index (A4) and therefore, the pure electrolyte retention amount (electrolyte retention capacity) is separately judged. As the third indicator, by an index (B9) obtained by multiplying a liquid descent speed property improvement index (B4) by a water content property improvement index (B6) for the thick fiber layer, a simple electrolyte retaining ability (ability to prevent downward movement of the electrolyte to retain it) of the thick fiber layer is judged. In the case where the simple electrolyte retaining ability of the thin fiber layer for the above index (A9) is high and the electrolyte retention amount for the above index (A8) is a predetermined amount or more but the sulfuric acid having a higher specific gravity released from the plate cannot be retained by the thin fiber layer and moves to the thick fiber layer (or simply penetrates the thick fiber layer from the thin fiber layer), when the electrolyte retaining ability (ability to prevent downward movement of the electrolyte to retain it) of the thick fiber layer is too poor, the downward movement of the electrolyte proceeds in the thick fiber layer even through the thin fiber layer retains the electrolyte, so that the electrolyte stratification prevention effect of the whole separator is collectively lowered, and therefore the simple electrolyte retaining ability (ability to prevent downward movement of the electrolyte to retain it) of the thick fiber layer is also judged. The concept of thickness is irrelevant to this index, and therefore the above index (B9) is not multiplied by a thickness (B7). As the fourth indicator, compatibility (C3) of the above index (A9) for the thin fiber layer and the above index (B9) for the thick fiber layer is judged. With respect to the electrolyte retention amount (A8) of the thin fiber layer, it is necessary that this satisfy a predetermined amount or more from the viewpoint of the electrolyte stratification prevention effect, but, depending on the specifications of the valve regulated lead-acid battery, the amount of the electrolyte released from the plate varies and the amount of the electrolyte to be retained by the thin fiber layer (the electrolyte retention amount required for the thin fiber layer) also varies.
(3) In the conventional separators in Comparative Examples 15 and 16, the stratification prevention effect is excellent, but the pressure properties are not good and the unit cost of the glass fiber material is high. Further, in the conventional separators in Comparative Examples 18 and 19, the unit cost of the glass fiber material is good and the pressure properties are also excellent, but the stratification prevention effect is not good.
(4) In contrast, as compared to the separator in Comparative Example 17 which is considered as the basic conventional technique of the invention, the separators in Examples 1 to 41 of the invention are individually improved in both the pressure properties and the stratification prevention effect, and are not particularly increased in the unit cost of the glass fiber material and individually have both excellent pressure properties and excellent stratification prevention effect, and thus can remove both the two main causes of the reduction of the life of valve regulated lead-acid battery (pressure lowering and electrolyte stratification), making it possible to further improve the life of the valve regulated lead-acid battery.
(5) Particularly, the separators in Examples 4, 5, 9 to 11, 15 to 18, 26, 28, 29, and 32 to 34 individually have especially excellent effect of improving both the pressure properties and the stratification prevention effect.

## Claims

**1.** A separator for a valve regulated lead-acid battery, comprising a paper sheet manufactured by a wet papermaking process mainly made of fine glass wool fibers,
wherein the separator is a structure in which a thin fiber layer comprising glass fibers having an average fiber diameter of 0.5 to 0.8 μm as the fine glass wool fibers and a thick fiber layer comprising glass fibers having an average fiber diameter of 1.3 to 1.9 μm as the fine glass wool fibers are laminated in the thicknesswise direction of the separator so that the one thick fiber layer is covered with the two thin fiber layers from both sides to constitute a three-layer laminated structure, wherein the average fiber diameter of the glass fibers in the all layers is 1.1 to 1.58 μm, wherein the thickness ratio of the thin fiber layers to the thick fiber layer in the all layers is 25/75 to 50/50.

**2.** The separator for the valve regulated lead-acid battery according to claim 1, **characterized in that** the average fiber diameter of the glass fibers in the all layers is 1.15 to 1.4 μm.

**3.** The separator for the valve regulated lead-acid battery according to claim 2, **characterized in that** the average fiber diameter of the glass fibers in the all layers is 1.2 to 1.3 μm.

**4.** The separator for the valve regulated lead-acid battery according to claim 1, **characterized in that** the average fiber diameter of the glass fibers constituting the thin fiber layer is 0.6 to 0.8 μm.

**5.** The separator for the valve regulated lead-acid battery according to claim 1, **characterized in that** the average fiber diameter of the glass fibers constituting the thick fiber layer is 1.4 to 1.6 μm.

**6.** The separator for the valve regulated lead-acid battery according to claim 1, **characterized in that** the thickness ratio of the thin fiber layers to the thick fiber layer in the all layers is 25/75 to 45/55.

**7.** The separator for the valve regulated lead-acid battery according to claim 1, **characterized in that** the two thin fiber layers have substantially the same thickness.

**8.** The separator for the valve regulated lead-acid battery according to claim 1, **characterized in that** the separator comprises substantially only the fine glass fibers.

**9.** The separator for the valve regulated lead-acid battery according to claim 1, **characterized in that** the thin fiber layers and the thick fiber layer are formed in a wet papermaking process for obtaining the paper sheet so that they are in a wet state and constitute a three-layer laminated structure.

**10.** The separator for the valve regulated lead-acid battery according to claim 1, **characterized in that** the thickness of one layer of the two thin fiber layers is 105 to 300% of the thickness of the other layer.

**11.** The separator for the valve regulated lead-acid battery according to claim 1, **characterized in that** the mean pore diameter of one layer of the two thin fiber layers is 105 to 180% of the mean pore diameter of the other layer and is 4.5 μm or less.

**Patentansprüche**

**1.** Separator für einen verschlossenen Bleiakkumulator, umfassend ein Papierblatt, welches durch einen Nass-Papierherstellungsprozess hauptsächlich aus feinen Glaswollfasern hergestellt ist,
wobei der Separator einen Aufbau aufweist, bei dem eine dünne Faserschicht, die Glasfasern mit einem mittleren Faserdurchmesser von 0,5 bis 0,8μm als feine Glaswollfasern aufweist, und eine dicke Faserschicht, die Glasfasern mit einem mittleren Faserdurchmesser von 1,3 bis 1,9μm als dünne Glaswollfasern umfasst, in Richtung der Dicke des Separators derart laminiert sind, dass die eine dicke Faserschicht mit den zwei dünnen Faserschichten von bzw. auf beiden Seiten überzogen ist, um eine laminierte Dreischichtstruktur zu bilden,
wobei der mittlere Faserdurchmesser der Glasfasern in sämtlichen Schichten 1,1 bis 1,58μm beträgt und wobei das Dickenverhältnis der dünnen Faserschichten zu der dicken Faserschicht in sämtlichen Schichten 25/75 bis 50/50 beträgt.

**2.** Separator für einen verschlossenen Bleiakkumulator nach Anspruch 1, **dadurch gekennzeichnet, dass** der mittlere Faserdurchmesser der Glasfasern in sämtlichen Schichten 1,15 bis 1,4μm beträgt.

**3.** Separator für einen verschlossenen Bleiakkumulator nach Anspruch 2, **dadurch gekennzeichnet, dass** der mittlere Faserdurchmesser der Glasfasern in sämtlichen Schichten 1,2 bis 1,3μm beträgt.

**4.** Separator für einen verschlossenen Bleiakkumulator nach Anspruch 1, **dadurch gekennzeichnet, dass** der mittlere Faserdurchmesser der die dünne Faserschicht bildenden Glasfasern 0,6 bis 0,8μm beträgt.

**5.** Separator für einen verschlossenen Bleiakkumulator nach Anspruch 1, **dadurch gekennzeichnet, dass** der mittlere Faserdurchmesser der die dicke Faserschicht bildenden Glasfasern 1,4 bis 1,6μm beträgt.

6. Separator für einen verschlossenen Bleiakkumulator nach Anspruch 1, **dadurch gekennzeichnet, dass** das Dickenverhältnis der dünnen Faserschichten zu der dicken Faserschicht in sämtlichen Schichten 25/75 bis 45/55 beträgt.

7. Separator für einen verschlossenen Bleiakkumulator nach Anspruch 1, **dadurch gekennzeichnet, dass** die zwei dünnen Faserschichten im Wesentlichen dieselbe Dicke aufweisen.

8. Separator für einen verschlossenen Bleiakkumulator nach Anspruch 1, **dadurch gekennzeichnet, dass** der Separator im Wesentlichen lediglich die feinen Glasfasern umfasst.

9. Separator für einen verschlossenen Bleiakkumulator nach Anspruch 1, **dadurch gekennzeichnet, dass** die dünnen Faserschichten und die dicke Faserschicht in einem Nass-Papierherstellungsprozess zur Erzielung des Papierblattes gebildet sind, derart, dass sie in einem nassen Zustand sind und eine laminierte Dreischichtstruktur bilden.

10. Separator für einen verschlossenen Bleiakkumulator nach Anspruch 1, **dadurch gekennzeichnet, dass** die Dicke einer Schicht der zwei dünnen Faserschichten 105 bis 300% der Dicke der anderen Schicht beträgt.

11. Separator für einen verschlossenen Bleiakkumulator nach Anspruch 1, **dadurch gekennzeichnet, dass** der mittlere Porendurchmesser einer Schicht der zwei dünnen Faserschichten 105 bis 180% des mittleren Porendurchmessers der anderen Schicht beträgt und 4,5μm oder weniger ist.

## Revendications

1. Séparateur pour une batterie plomb - acide régulée par valve comprenant une feuille de papier fabriquée par un procédé de fabrication de papier par voie humide principalement composée de fines fibres de laine de verre, dans lequel le séparateur est une structure dans laquelle une fine couche de fibres comprenant des fibres de verre ayant un diamètre de fibre moyen de 0,5 à 0,8 μm en tant que fines fibres de laine de verre et une épaisse couche de fibres comprenant des fibres de verre ayant un diamètre de fibre moyen de 1,3 à 1,9 μm en tant que fines fibres de laine de verre, sont déposées en couche dans le sens de l'épaisseur du séparateur de sorte que la une couche épaisse de fibres est recouverte par les deux fines couches de fibres des deux cotés afin de constituer une structure stratifiée à trois couches, dans lequel le diamètre de fibre moyen des fibres de verre dans toutes les couches est de 1,1 à 1,58 μm, dans lequel le rapport d'épaisseur des fines couches de fibres sur la couche épaisse de fibres dans toutes les couches est de 25/75 à 50/50.

2. Séparateur pour la batterie plomb - acide régulée par valve selon la revendication 1, **caractérisé en ce que** le diamètre de fibre moyen des fibres de verre dans toutes les couches est de 1,15 à 1,4 μm.

3. Séparateur pour la batterie plomb - acide régulée par valve selon la revendication 2, **caractérisé en ce que** le diamètre de fibre moyen des fibres de verre dans toutes les couches est de 1,2 à 1,3 μm.

4. Séparateur pour la batterie plomb - acide régulée par valve selon la revendication 1, **caractérisé en ce que** le diamètre de fibre moyen des fibres de verre constituant la fine couche de fibres est de 0,6 à 0,8 μm.

5. Séparateur pour la batterie plomb - acide régulée par valve selon la revendication 1, **caractérisé en ce que** le diamètre de fibre moyen des fibres de verre constituant la couche épaisse de fibres est de 1,4 à 1,6 μm.

6. Séparateur pour la batterie plomb - acide régulée par valve selon la revendication 1, **caractérisé en ce que** le rapport d'épaisseur des fines couches de fibres sur la couche épaisse de fibres dans toutes les couches est de 25/75 à 45/55.

7. Séparateur pour la batterie plomb - acide régulée par valve selon la revendication 1, **caractérisé en ce que** les deux fines couches de fibres ont sensiblement la même épaisseur.

8. Séparateur pour la batterie plomb - acide régulée par valve selon la revendication 1, **caractérisé en ce que** le séparateur ne comprend sensiblement que les fines fibres de verre.

9. Séparateur pour la batterie plomb - acide régulée par valve selon la revendication 1, **caractérisé en ce que** les fines couches de fibres et la couche épaisse de fibres sont formées lors d'un procédé de fabrication de papier par voie humide en obtenant la feuille de papier de sorte qu'elles sont dans un état humide et constituent une structure stratifiée à trois couches.

10. Séparateur pour la batterie plomb - acide régulée par valve selon la revendication 1, **caractérisé en ce que** l'épaisseur de la une couche des deux fines couches de fibres représente de 105 à 300% de l'épaisseur de l'autre couche.

11. Séparateur pour la batterie plomb - acide régulée par valve selon la revendication 1, **caractérisé en ce que** le diamètre de pore moyen d'une couche des deux fines couches de fibres représente de 105 à 180% du diamètre de pore moyen de l'autre couche et est de 4,5 μm ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5067463 A